# DEMANDE DE BREVET EUROPEEN

(11) **EP 2 213 159 A1**
(43) Date de publication de la demande: **04.08.2010**
(21) Numéro de dépôt: 10152447.8
(22) Date de dépôt: 02.02.2010
(51) Int. Cl.: A01G 13/02

(54) **Machine agricole pour derouler et poser un film ou voile, notamment en grande largeur, sur des cultures, et utilisation de celle-ci pour le deroulement et la pose d'un film sur des cultures**

(30) Priorité: 02.02.2009 FR 0950632
(71) Demandeur: Couton, Bertrand, 85330 Noirmoutier en l'Ile (FR)
(72) Inventeur: Couton, Bertrand, 85330 Noirmoutier en l'Ile (FR)
(74) Mandataire: Chaillot, Geneviève

(57) **Abrégé**

La présente invention a pour objet une machine agricole pour le déroulement et la pose d'un film ou voile, notamment en grande largeur, comprenant au moins :
- un châssis (2) monté sur des roues (3A, 3B) ;
- des moyens (11A, 11B) de raclage de la terre ;
- des moyens (9A, 9B) de charriage de la terre ;
- des moyens de support (13A, 13B, 13C) de bobine de film ; et
- des moyens (21A, 21B) de mise en volume du film situés ; les moyens de déroulement et de pose du film étant constitués par les roues (3A, 3B), les bords latéraux du film en utilisation étant amenés à passer sur les parties avant puis inférieure des roues (3A, 3B) dans la direction de progression de la machine pour un déroulement et une pose au sol du film, et à être recouverts de terre par les moyens (9A, 9B) de charriage de la terre,
caractérisée par le fait que les moyens de support (13A, 13B, 13C) de bobine de film sont montés en hauteur par rapport aux moyens de déroulement et de pose du film pour donner plus de volume au film.

## Description

La présente invention a pour objet une machine agricole, permettant de dérouler et poser un film sur des cultures, notamment en grande largeur, ainsi qu'une utilisation de celle-ci pour le déroulement et la pose d'un voile, d'un film ou d'un filet sur des cultures.

Dans la culture des plantes potagères, et en particulier dans la culture des pommes de terre, il est indispensable de disposer un film sur les planches ou billons, dans lesquels les pommes de terre sont plantées.

En effet, une fois que les pousses sont sorties de terre, les feuilles sur les pousses assurent le développement des tubercules sous terre. Ces pousses sont toutefois relativement fragiles, notamment vis-à-vis du vent, qui peut les casser, et une fois les pousses cassées, le développement sous terre des tubercules est compromis.

Le film disposé sur les planches après la sortie des pousses de terre, fournit alors une protection contre le vent, mais aussi contre les gelées nocturnes, la pluie battante, la grêle, le dessèchement et les parasites. Le microclimat généré sous le film ainsi que la température au sol plus élevée favorisent également tout particulièrement la croissance des plantes. Le film assure l'émergence des semences et offre des conditions de croissance excellentes pour les plantes.

Il est cependant très important, lors de la disposition du film sur les planches, que le film soit bien tendu. En effet, lorsque le film n'est pas correctement tendu, un vent soufflant à la surface du film peut amener la surface du film à se déformer, et, en cas de vents violents, la surface du film peut être amenée à battre violemment, voire à se déchirer, le battement de la surface du film contre les pousses cassant quelquefois irrémédiablement les pousses et compromettant la récolte.

Jusqu'à maintenant, la technique la plus utilisée pour disposer un film sur les planches consistait à dérouler le film au fur et à mesure sur toute la longueur de la planche, les bords du film étant manuellement recouverts de terre par des opérateurs, pour assurer une tension du film satisfaisante. Cette opération est fastidieuse, fatigante, et coûteuse en main d'oeuvre, et ne permet pas une pose uniforme du film sur la ou les planches.

Dans la description qui suit, l'expression « planche en grande largeur » signifiera une planche de grande largeur ou plusieurs planches de petites largeurs prises simultanément.

Cette technique présente plusieurs inconvénients manifestes : elle coûte cher en main d'oeuvre, elle est longue, et la tension du film n'est pas uniforme le long de la longueur de la planche, augmentant ainsi les risques d'instabilité au vent du film.

Des machines ont été construites pour remédier à ces divers inconvénients. Les machines qui ont été construites étaient très lourdes, difficiles à manoeuvrer, et ne permettaient pas de recouvrir d'un film des planches de largeurs importantes, les planches de largeur importante étant alors toujours recouvertes d'un film par la technique traditionnelle évoquée ci-dessus.

La plupart des machines pour disposer un film sur des cultures connues sont ainsi adaptées pour des planches de faible largeur.

On connaît notamment le brevet français FR 2 693 625, qui décrit une machine de pose d'un film sur une planche de petite largeur. Cette machine ne peut pas être adaptée à la pose d'un film sur une planche de grande largeur, sa structure avec la bobine sur les roues de pose empêchant un bon déroulement de la bobine de grande largeur, et conduisant systématiquement à la déchirure du film en grande largeur.

Des tentatives infructueuses ont été faites pour adapter ces machines existantes à des planches de grande largeur.

Le principal problème posé par ces machines est le manque de volume entre les éléments de support de bobine et les moyens de pose de film, le volume de film devant être important dans le cas des grandes largeurs, compte-tenu des surfaces de film à poser et du poids de la bobine.

Les problèmes posés par ces machines adaptées sont ainsi les suivants :
- la machine adaptée est trop lourde, très dure à déplacer dans les champs ;
- la longueur de la bobine, conjuguée à la faible distance entre la bobine et les moyens de disposition du film ou voile sur le sol, la plupart du temps des roues, la bobine étant généralement disposée au voisinage des roues, voire sur les roues, font qu'il n'y a pas assez de mou de tissu, et que la bobine ne se déroule pas aussi vite que le film est posé, ce qui crée des contraintes sur le film qui peuvent provoquer sa déchirure ;
- la machine est inadaptée pour les bobines de grande largeur, qui ont tendance à se cintrer sur la machine en cours d'utilisation, empêchant encore davantage la rotation sur elle-même de la bobine, et conduisant au même problème qu'évoqué ci-dessus, à savoir le déchirement du film ;
- lorsque des moyens sont prévus sur la machine adaptée pour supporter la bobine sur sa largeur, ces moyens sont généralement des fuseaux, maintenant généralement bien la bobine, mais présentant l'inconvénient, une fois encore, d'empêcher le bon déroulement de la bobine dans des conditions d'intempéries, la bobine présentant davantage de frottements avec les moyens de type fuseau, et provoquant une fois encore une déchirure possible du film ou voile lors de sa pose.

La présente invention surmonte les inconvénients évoqués ci-dessus, et propose une structure simple, légère, assurant un recouvrement par un film tendu de manière appropriée sur plusieurs planches simultanément.

Dans la machine agricole selon la présente invention, la bobine est maintenue en hauteur sur des moyens de support de la bobine constitués par des éléments en forme de fourche en Y, la bobine étant disposée sur des galets en caoutchouc prévus sur ces moyens de support, ce qui permet de donner une plus grande distance entre les moyens de support de bobine et les roues de pose et donc davantage de mou dans le film, ce qui est essentiel dans la pose d'un film sur des grandes largeurs pour éviter la déchirure du film.

La bobine est de plus maintenue sur toute sa largeur non pas de façon continue, mais de façon discrète, sur plusieurs éléments de maintien répartis sur sa largeur, permettant un bon déroulement de la bobine sur elle-même au moyen des galets de caoutchouc, permettant ainsi d'utiliser la machine agricole de l'invention même en cas d'intempéries.

Des éléments de mise en volume du film sont également prévus sur la machine pour donner encore plus de volume au film, entre les moyens de support de la bobine et les roues, pour garantir une non-déchirure du film.

La présente invention propose une structure facile à manoeuvrer dans un champ, légère, qui permet de recouvrir d'un film une ou plusieurs planches avec un simple tracteur, économisant ainsi de la main d'oeuvre et du temps, et permettant par exemple de réagir plus rapidement face à des intempéries pour protéger des récoltes.

De plus, de part sa structure, la machine peut être adaptée à différentes largeurs de planches, les dimensions du cadre de la machine étant facilement réglables pour s'adapter à la largeur de la planche considérée.

On peut prévoir des moyens d'attelage à un tracteur et des roues sur le cadre de la machine afin de pouvoir remorquer la machine dans le sens de sa longueur et non de sa largeur, pour faciliter son transport sur les routes.

A cet effet, la présente invention a pour objet une machine agricole pour le déroulement et la pose d'un film ou voile, notamment en grande largeur, comprenant au moins :
- un châssis monté sur des roues ;
- des moyens de raclage de la terre montés sur le châssis et positionnés, dans la direction de progression de la machine, à l'avant des roues pour dégager la terre devant les roues avant le passage de celles-ci ;
- des moyens de charriage de la terre montés sur le châssis et positionnés, dans la direction de progression de la machine, à l'arrière des roues pour rabattre de la terre à l'arrière des roues après le passage de celles-ci ;
- des moyens de support de bobine de film, montés sur le châssis, alimentant le film vers des moyens de déroulement et de pose du film sur le sol ; et
- des moyens de mise en volume du film situés entre les moyens de support de bobine de film et les moyens de déroulement et de pose du film pour donner du volume au film et éviter sa déchirure ;
   les moyens de déroulement et de pose du film étant constitués par les roues, les bords latéraux du film en utilisation étant amenés à passer sur les parties avant puis inférieure des roues dans la direction de progression de la machine pour un déroulement et une pose au sol du film, et à être recouverts de terre par les moyens de charriage de la terre,
caractérisée par le fait que les moyens de support de bobine de film sont montés surélevés par rapport aux moyens de déroulement et de pose du film pour donner plus de volume au film, la distance minimale entre l'axe de rotation de la bobine et les moyens de déroulement et de pose du film étant supérieure au rayon maximal de la bobine.

La bobine de film ne repose donc pas directement sur les roues, mais sur les moyens de support de bobine, surélevés par rapport à la surface supérieure des roues.

Chacun des moyens de support de bobine de film peut être réglable en hauteur par rapport au plan moyen du châssis et/ou en position sur le châssis.

Les moyens de support de bobine de film peuvent être des éléments en forme de Y dirigés vers le haut, alignés, la bobine s'étendant entre les branches des éléments en forme de Y, et chaque branche du Y comportant à son extrémité libre des galets qui coopèrent avec la bobine de film afin de permettre son déroulement.

Les moyens de support de bobine de film peuvent porter en outre moyens de support de galets supplémentaires qui coopèrent avec la bobine de film afin de faciliter son déroulement, positionnés au niveau de la fourche des éléments en forme de Y, lesdits moyens de support de galets étant réglables en hauteur par rapport à la fourche des éléments en forme de Y pour s'adapter à l'épaisseur variable de la bobine de film.

Les galets peuvent notamment être en caoutchouc ou en matière plastique, et peuvent avoir différents diamètres, compris entre approximativement 2 cm et 30 cm.

Les bobines n'étant pas supportées par un fuseau, les frottements sont réduits et on obtient un meilleur déroulement de la bobine. En cas d'intempéries, la machine peut être utilisée.

Au moins l'un des moyens de support de bobine de film peut supporter la bobine de film en son centre, afin d'éviter un cintrage de celle-ci, et deux des moyens de support de bobine de film peuvent supporter les extrémités de la bobine, des moyens pouvant être prévus sur ces deux derniers moyens de support de bobine pour éviter un mouvement latéral de la bobine.

Le châssis peut être supporté à l'avant par des roulettes avant, et à l'arrière par des roulettes arrière, les plans de roulement des roulettes arrière étant inclinés par rapport à la verticale et se croisant sous le plan moyen du châssis, pour assurer une bonne directivité de la machine.

L'inclinaison des roulettes arrière permet une diminution de la largeur du passe-pied entre les planches.

Les roulettes avant et/ou arrière peuvent être réglables en hauteur par rapport au châssis.

Les roues peuvent être montées en suspension sur le châssis, pour s'adapter au terrain sur lequel la machine est utilisée.

Les pneus des roues peuvent être rainurés pour assurer une meilleure prise du film sur les roues et un meilleur entraînement du film sur les roues pendant le déroulement et la pose du film.

Les plans de roulement des roues peuvent être inclinés par rapport à la verticale et se croiser sous le plan moyen du châssis, et/ou être inclinés par rapport à l'horizontale et se croiser vers l'avant du châssis, pour assurer une meilleure prise du film sur les roues et un meilleur entraînement de celui-ci par les roues.

Les jantes des roues peuvent être décentrées vers l'extérieur du châssis, pour permettre une largeur entre chaque bord latéral du film posé minimale, et/ou peuvent être réglables en position sur leurs axes de rotation, pour permettre un réglage des roues.

Le châssis peut porter des moyens portant des galets de maintien coopérant avec chacune des roues pour maintenir le film sur chacune des roues.

Les différents éléments constituant le châssis peuvent être agencés réglables en position entre eux de telle sorte que la dimension du châssis est adaptable à différentes largeur de pose de film.

Le châssis peut porter en outre des moyens d'attelage à un tracteur.

Les moyens de raclage de la terre et/ou les moyens de charriage de la terre peuvent être montés réglables en hauteur sur le châssis.

Le châssis peut porter en outre un frein de bobine en vue d'empêcher tout mouvement horizontal de celle-ci lors de l'utilisation de la machine.

Pour chaque côté du châssis, les moyens de raclage de la terre et les moyens de charriage de la terre peuvent être alignés, les roues étant décalées vers l'intérieur du châssis par rapport à cet alignement, pour permettre un meilleur recouvrement du film.

La machine agricole selon la présente invention peut en outre comprendre un moteur apte à être relié à l'axe de rotation de la bobine pour l'entraîner en rotation, permettant de réenrouler un film sur l'axe de rotation de la bobine.

L'axe de rotation de la bobine peut alors porter des moyens de guidage des bords latéraux du film lors de son réenroulement.

La machine peut comprendre en outre des éléments de cylindre, de diamètre interne sensiblement égal au diamètre externe de l'axe de rotation de la bobine et fixés par rapport au châssis de la machine, disposés à chaque extrémité de l'axe de rotation de la bobine et permettant par frottement de limiter le mouvement de rotation de la bobine.

La présente invention a également pour objet l'utilisation de la machine agricole telle que définie ci-dessus, pour le déroulement et la pose d'un film sur des cultures, ou pour le réenroulement d'un film déroulé.

Pour mieux illustrer l'objet de la présente invention, on va maintenant en décrire un mode de réalisation particulier, avec référence au dessin annexé, sur lequel :
- la Figure 1 est une vue schématique de dessus de la machine agricole selon la présente invention, tractée par un tracteur, et déroulant un film sur plusieurs planches ;
- la Figure 2 est une vue en perspective de la machine agricole de la Figure 1, montrant plus en détail la structure de la machine, la bobine de film à disposer sur une planche étant représentée en lignes fantômes sur la machine ;
- la Figure 3 est une vue en détail de la partie avant de la machine agricole de la Figure 1, représentée sans la bobine de film ;
- la Figure 4 est une vue en détail de la partie arrière de la machine agricole de la Figure 1, représentée avec la bobine de film ;

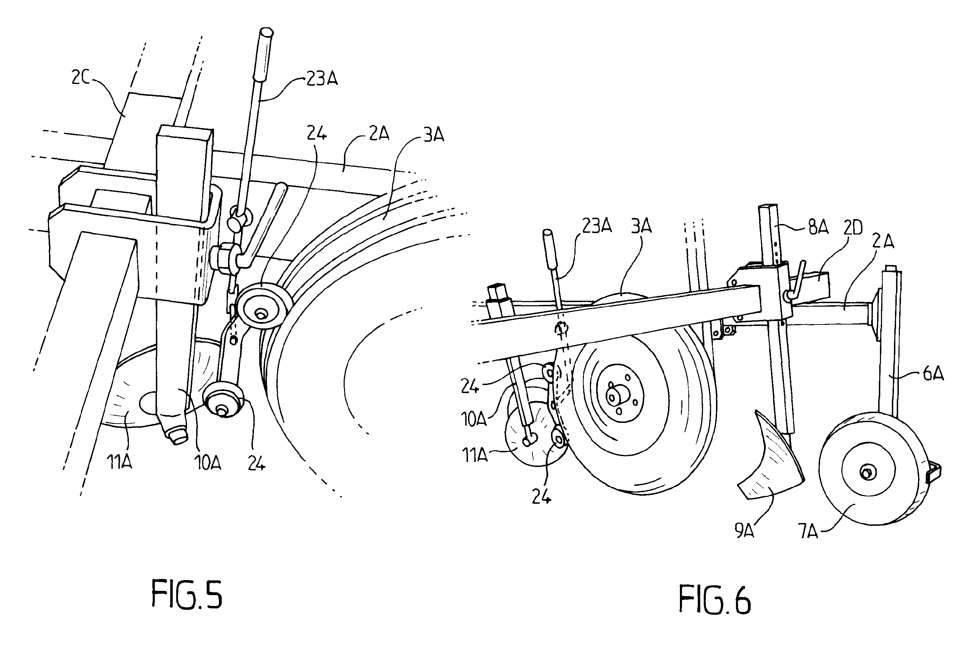

- la Figure 5 est une vue de détail de dessus de la partie latérale avant de la machine agricole de la Figure 1, représentée sans la bobine de film ;
- la Figure 6 est une vue en perspective de la partie latérale arrière de la machine agricole de la Figure 1, représentée sans la bobine de film ;
- la Figure 7 est une vue en perspective partielle de la machine de la Figure 1, représentée avec la bobine de film sur la machine, et illustrant la manière dont le film est apposé sur la planche ;
- la Figure 8 est une vue de détail du dispositif de support de bobine de film de la machine agricole de la Figure 1 ;
- la Figure 9 est une vue en perspective d'une variante de la machine agricole de la Figure 1, équipée d'un dispositif dans un premier état permettant de réenrouler un film déroulé ;
- la Figure 10 est une vue latérale du dispositif de la Figure 9 ; et
- la Figure 11 est une vue latérale de la variante de la Figure 9, dans lequel le dispositif est dans un deuxième état permettant de dérouler le film réenroulé.

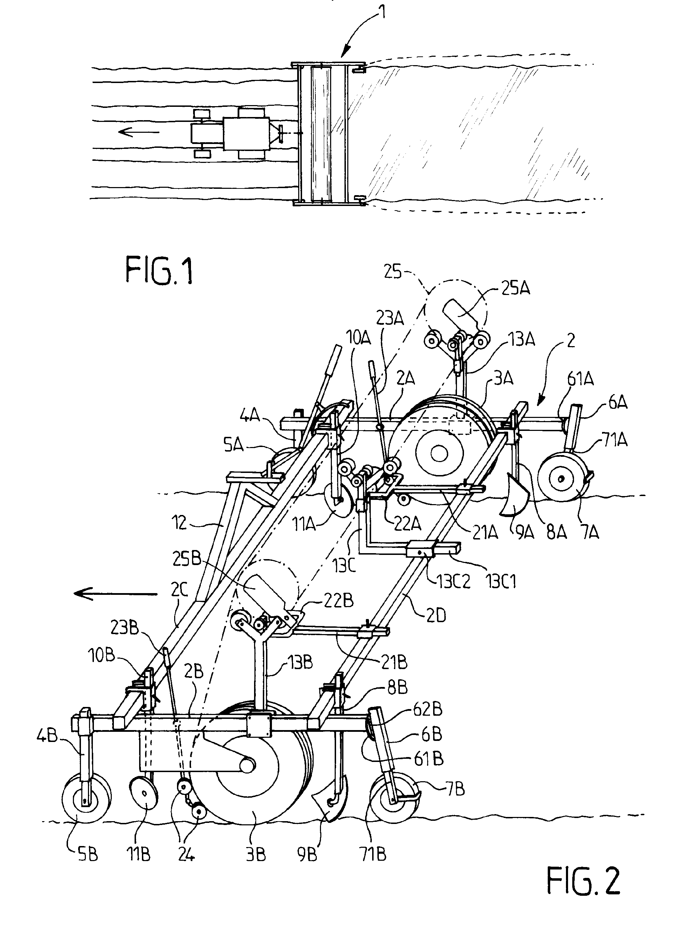

Dans la description des Figures qui suit, les termes avant, arrière, droite et gauche utilisés pour décrire des parties de la machine se réfèrent aux différentes parties de la machine lorsque celle-ci est utilisée dans le sens d'utilisation qui est le sens normal d'avancée de la machine, illustrée par la flèche sur la Figure 1.

Si l'on se réfère à la Figure 2, on peut voir que la machine agricole 1 selon la présente invention comprend un châssis rectangulaire 2 supporté par deux roues 3A, 3B.

Le châssis 2 comporte deux traverses parallèles 2A, 2B, sur lesquelles sont fixés deux longerons parallèles 2C, 2D, l'écartement entre les longerons 2C, 2D étant inférieur à la longueur des traverses 2A, 2B, de telle sorte que les traverses 2A, 2B font saillie à l'avant et à l'arrière du châssis 2.

L'écartement entre les traverses 2A, 2B est quant à lui réglable, afin de s'adapter à une largeur d'une planche sur laquelle la machine agricole 1 doit être utilisée.

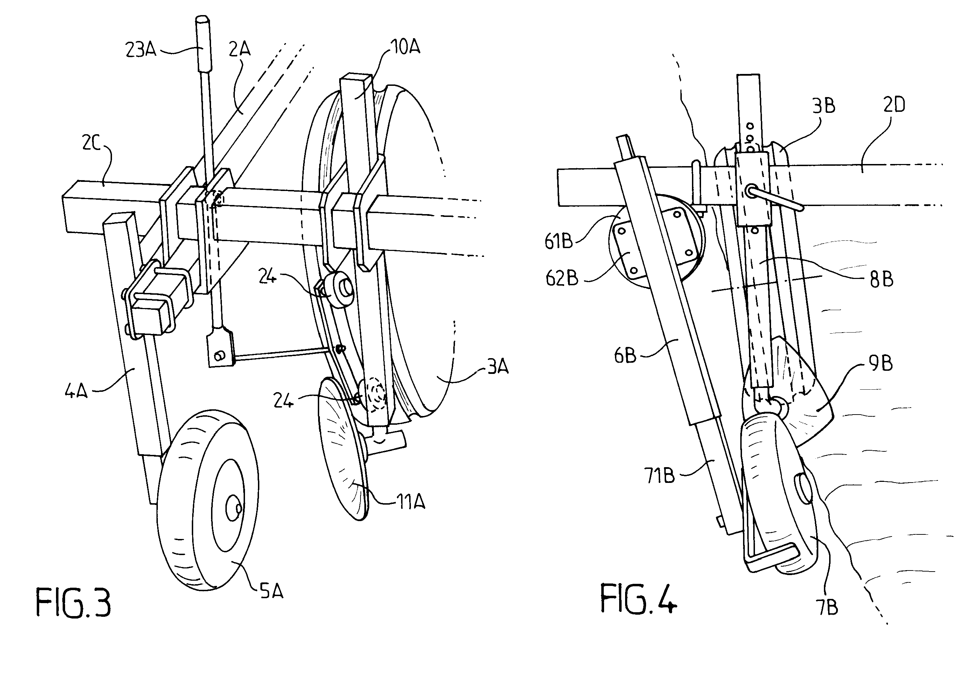

Les roues 3A, 3B sont montées en suspension pour s'adapter au terrain sur les traverses 2A, 2B, et les pneus des roues 3A, 3B, présentent une structure à nervures épaisses, comme cela est représenté plus en détail sur la Figure 4. Les roues 3A, 3B seront décrites plus en détail ci-après.

Les roues 3A, 3B sont montées sur les traverses 2A, 2B, de telle sorte que leurs plans de rotation sont inclinables autour d'un axe vertical et autour d'un axe horizontal, contenu dans le plan de la roue.

Le châssis 2 porte au niveau de sa partie inférieure plusieurs éléments.

Chaque partie de traverse, respectivement 2A, 2B, en saillie vers l'avant de la machine agricole 1, porte l'extrémité supérieure d'une barre verticale, respectivement 4A, 4B, dirigée vers le sol, dont l'extrémité inférieure porte une roulette, respectivement 5A, 5B. Les barres 4A, 4B sont montées réglables en hauteur sur les traverses, respectivement 2A, 2B, de telle sorte que la machine agricole 1 est supportée à l'avant par les roulettes 5A, 5B. Le réglage en hauteur peut s'effectuer par exemple par une bride de serrage reliant la traverse 2A, 2B et la barre verticale, 4A, 4B.

Chaque partie de traverse, respectivement 2A, 2B, en saillie vers l'arrière de la machine agricole 1, porte l'extrémité supérieure d'une barre verticale, respectivement 6A, 6B, dirigée vers le sol, dont l'extrémité inférieure porte une roulette, respectivement 7A, 7B. Les barres 6A, 6B sont montées réglables en hauteur sur les traverses, respectivement 2A, 2B, comme pour les barres 4A, 4B.

Comme on peut le voir sur la Figure 4, les barres 6A, 6B sont montées inclinables par rapport à la direction verticale sur les traverses 2A, 2B, à l'extrémité arrière des traverses 2A, 2B, de telle sorte que la machine agricole 1 est supportée à l'arrière par les roulettes 7A, 7B.

Un disque, respectivement 61A, 61B, est fixé sur l'extrémité arrière des traverses 2A, 2B, les barres 6A, 6B portant respectivement sur un côté une plaque rectangulaire, 62B (seule plaque représentée sur les dessins), apte à être vissée sur le disque respectif 61A, 61B, pour régler l'inclinaison des roulettes arrières 7A, 7B.

La hauteur des roulettes 7A, 7B est réglée au niveau de l'extrémité inférieure de la barre 6A, 6B, la roulette, respectivement 7A, 7B étant montée sur une barre 71A, 71B montée ajustable dans la barre respective 6A, 6B.

L'inclinaison des roulettes 7A, 7B, assure un terrage, et permet également de réduire la largeur du passe-pied entre les planches.

Les roulettes 7A, 7B peuvent donc avoir leurs plans de rotation inclinés par rapport à la verticale, les barres 6A, 6B étant inclinées au niveau de leurs extrémités inférieures vers l'intérieur du châssis 2, comme indiqué sur la Figure 4.

Au voisinage de chacune de ses extrémités de liaison avec les traverses 2A, 2B, le longeron arrière 2D porte l'extrémité supérieure d'une barre verticale, respectivement 8A, 8B, dirigée vers le sol, l'extrémité inférieure de la barre verticale, respectivement 8A, 8B, portant une charrue, respectivement 9A, 9B, constituée par une plaque cintrée dans la direction verticale, orientée du bord latéral extérieur du châssis 2 vers l'arrière et l'intérieur du châssis 2, pour recueillir de la terre à l'extérieur du châssis 2 vers l'arrière des roues 3A, 3B.

La hauteur des charrues 9A, 9B peut être réglée de manière analogue au réglage en hauteur des barres 5A, 5B sur les traverses 2A, 2B.

Au voisinage de chacune de ses extrémités de liaison avec les traverses 2A, 2B, le longeron avant 2C porte l'extrémité supérieure d'une barre verticale, respectivement 10A, 10B, dirigée vers le sol, l'extrémité inférieure de la barre verticale, respectivement 10A, 10B, portant un racleur, respectivement 11A, 11B, constitué par un disque cintré dans la direction verticale, dont le plan est incliné à la fois vers l'avant et l'intérieur du châssis 2, pour racler de la terre vers l'extérieur du châssis 2 à l'avant des roues 3A, 3B.

La hauteur racleurs 11A, 11B peut être réglée de manière analogue au réglage en hauteur des barres 6A, 6B sur les traverses 2A, 2B.

En ce qui concerne leur disposition sur les longerons, respectivement 2C, 2D, les charrues 9A, 9B, sont disposées sensiblement plus vers l'extérieur du châssis que les racleurs 11A, 11B.

Les roues 3A, 3B, sur les traverses 2A, 2B, sont légèrement décalées vers l'extérieur par rapport aux charrues 9A, 9B et aux racleurs 11A, 11B.

Au niveau de sa partie supérieure, le châssis 2 porte un dispositif d'attelage à un tracteur 12, monté centré sur la partie supérieure du longeron avant 2C.

Des éléments de support d'une bobine de film, respectivement 13A, 13B, 13C, sont montés de telle sorte que leurs parties verticales sont alignées entre elles, dans la direction de la longueur des longerons 2C, 2D, sur la partie supérieure du châssis 2, et maintiennent et supportent en hauteur la bobine de film.

Un premier élément d'extrémité 13A, est monté sur la traverse 2A, réglable en position sur la longueur de la traverse 2A et en hauteur par rapport au plan du châssis 2, un deuxième élément d'extrémité 13B est monté sur la traverse 2B, réglable en position sur la longueur de la traverse 2B et en hauteur par rapport au plan du châssis 2, et un élément central 13C est monté centré sur le longeron arrière 2D, la profondeur d'introduction de l'élément 13C vers l'intérieur du châssis et sa hauteur par rapport au plan moyen du châssis 2 étant elles aussi réglables, les trois éléments 13A, 13B, 13C devant être alignés dans un plan vertical et dans un plan horizontal en utilisation, et donner le maximum de volume au film issu de la bobine afin qu'il ne déchire pas.

Ainsi, en utilisation, la distance entre l'axe de rotation de la bobine de film sur les supports de bobine et la surface supérieure des roues 3A, 3B est supérieure au rayon maximal de la bobine, de telle sorte que la bobine n'est jamais en contact avec les roues 3A, 3B.

Chaque élément de support de bobine, respectivement 13A, 13B, 13C, a une partie verticale en forme de fourche, dressée vers le haut.

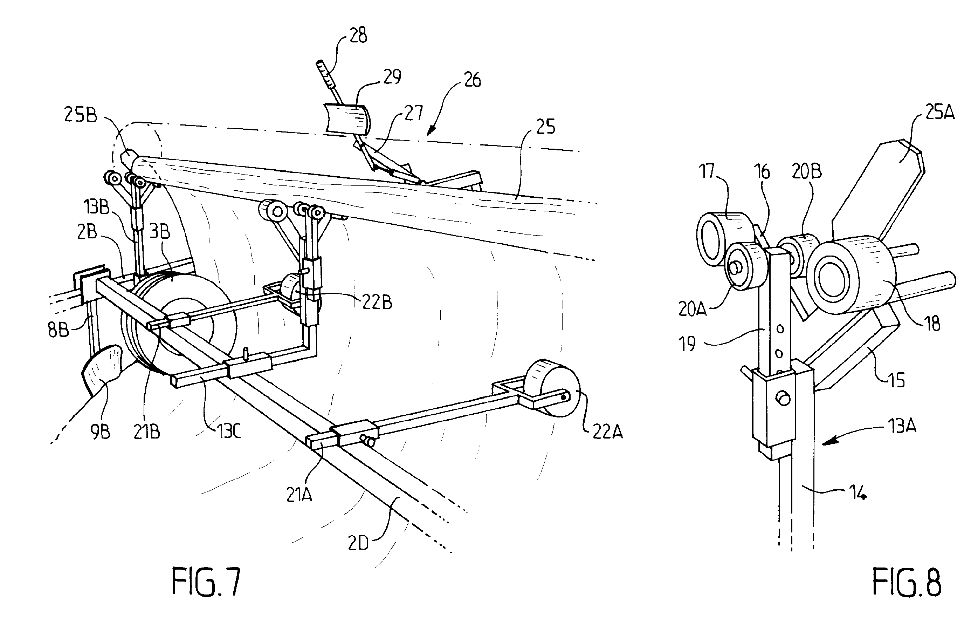

La structure des éléments de support de bobine va maintenant être décrite plus en détail en référence à la Figure 8, sur laquelle on a représenté l'élément de maintien 13A.

L'élément 13A comporte une barre verticale 14, fixée à son extrémité inférieure au châssis, et présentant deux bras 15, 16 à son extrémité supérieure, les deux bras 15, 16 étant reliés à une extrémité, et conférant la forme de Y à l'élément de maintien 13A.

Chaque bras 15, 16, porte à son extrémité libre un galet en caoutchouc, respectivement 17, 18.

Une deuxième barre verticale 19, parallèle à la première barre verticale 14, et fixée réglable en hauteur à son extrémité inférieure au niveau de la fourche de l'élément 13A, et porte de part et d'autre de son extrémité supérieure, deux galets de caoutchouc centraux supplémentaires, respectivement 20A, 20B.

L'élément 13C présente une partie verticale analogue à celle de l'élément 13A, et présente également une barre horizontale 13C1, reliée à une extrémité à l'extrémité inférieure de la partie verticale de l'élément 13C, et dont l'extrémité libre est fixée réglable sur le longeron arrière 2D au moyen d'une bride de serrage, permettant ainsi de régler la profondeur de pénétration de l'élément 13C à l'intérieur du châssis 2 de la machine 1.

En utilisation, une bobine de film 25, représentée sur la Figure 7, est posée sur les éléments 13A, 13B, 13C, et une plaque, respectivement 25A, 25B, fixée sur chacun des éléments d'extrémité, 13A, 13B, sur le côté des éléments 13A, 13B à l'extérieur du châssis 2, maintient la bobine 25 en place sur les éléments 13A, 13B, 13C.

Les galets en caoutchouc des éléments 13A, 13B, 13C permettent un bon déroulement de la bobine 25, tandis que le réglage en hauteur des galets centraux (20A, 20B) sur la Figure 8 permettent un bon positionnement de la bobine sur les éléments 13A, 13B, 13C, en fonction de l'épaisseur de la bobine 25 au cours de son utilisation.

Enfin, sur le longeron arrière 2D, entre chacun des éléments de maintien d'extrémité 13A, 13B et l'élément de maintien central 13C, est fixé un élément de mise en volume du film, respectivement 21A, 21B, constitué par une barre horizontale, fixée à une extrémité au longeron arrière 2D, dirigée vers l'intérieur du châssis 2, et l'élément de mise en volume du film, respectivement 21A, 21B, portant à son autre extrémité une roue, respectivement 22A, 22B, destinée à donner du volume à la chute de la bobine 25, comme on peut le voir sur la Figure 7. La longueur de la barre à l'intérieur du châssis 2 est réglable.

Le réglage des éléments de support de bobine 13A, 13B et 13C, en hauteur et en position sur les traverses pour les éléments 13A, 13B et en hauteur et en profondeur dans le châssis pour l'élément 13C et le réglage des éléments de mise en volume 21A, 21B permettent de régler la tension du film et son volume.

Comme on peut le voir sur la Figure 3, une manivelle, respectivement 23A, 23B, est montée à l'intérieur du châssis 2, fixée rotative au niveau de son extrémité supérieure sur chaque traverse correspondante, respectivement 2A, 2B, à l'avant de la roue, respectivement 3A, 3B, et porte à son extrémité inférieure des galets de maintien 24 du film sur la partie de la roue, respectivement 3A, 3B, en avant de la machine.

Un frein de bobine 26 est prévu sur la machine 1, pour maintenir la bobine 25 en place sur les éléments de support 13A, 13B, 13C, sur la machine 1 lorsque la machine 1 passe sur un terrain accidenté, ledit frein de bobine 26 étant constitué par un bras articulé 27, monté rotatif sur la partie haute de l'attelage 12 à une de ses extrémités, et comprenant à son extrémité distale une poignée 28 pour abaisser le frein 26 sur la bobine 25 en utilisation.

Le frein 26 comprend également une pièce 29 cintrée, longitudinale, destinée à venir s'apposer sur la partie supérieure de la bobine 25 lors de l'utilisation.

En utilisation, la machine agricole 1 est attachée à l'arrière d'un tracteur T par l'attelage 12, comme sur la Figure 1.

Une bobine 25 de film à déposer sur une planche est posée sur les éléments de maintien de bobine 13A, 13B, 13C, le frein 26 étant posé sur la bobine, et la bobine 25 est dans un premier temps suffisamment déroulée pour qu'une partie du film de la bobine 25 soit amenée à passer sous les roues 3A, 3B.

Selon une caractéristique des roues 3A, 3B, la jante est décentrée du plan moyen de chaque roue 3A, 3B. La jante est décalée vers l'extérieur du châssis 2, ce qui permet que le film, lors de sa pose, soit davantage pris par le bord de la roue. La jante décentrée, combinée aux nervures sur le pneu des roues 3A, 3B, permet un meilleur entraînement du film.

Il est à noter que l'homme du métier réglera la position des éléments 13A, 13B, et 13C, ainsi que la position des éléments 9A, 9B, 11A, 11B et 19 en fonction du terrain et de la planche.

Les galets de maintien 24 sont ensuite apposés par l'intermédiaire des manivelles 23A, 23B, sur le film sur les parties avant des roues 3A, 3B, pour assurer que le film est bien guidé sur les roues 3A, 3B.

Les éléments de mise en volume, respectivement 21A, 21B, sont réglés pour donner suffisamment de volume au film pour que la bobine 26 se déroule sans que les roues 3A, 3B ne tirent trop sur le film, afin de ne pas risquer de déchirer le film.

Ensuite, on peut commencer le déroulement proprement dit du film sur la planche.

A mesure que le tracteur T avance, les racleurs 11A, 11B à l'avant de la machine 2 creusent un sillon devant les roues 3A, 3B, en rejetant la terre issue de cette opération vers l'extérieur de la machine.

L'inclinaison du plan de rotation des roues 3A, 3B autour d'un axe vertical, vers l'intérieur et vers l'avant du châssis 2 de la machine 1, exerce un appui sur le film, qui pousse la bobine 25, maintenue libre de tourner sur elle-même sur les galets de caoutchouc 17, 18, 20A, 20B des éléments de maintien 13A, 13B, 13C, à se dérouler d'elle-même, et donc à dérouler le film.

L'inclinaison du plan de rotation des roues 3A, 3B par rapport à un axe horizontal contenu dans le plan de rotation des roues 3A, 3B, les parties basses des roues 3A, 3B étant ramenées vers l'intérieur du châssis 2 tandis que les parties hautes des roues 3A, 3B sont écartées vers l'extérieur du châssis 2, ont pour effet de poser le film dans le sillon creusé par les racleurs 11A, 11B, du côté du sillon le plus vers l'intérieur du châssis, c'est-à-dire du côté du sillon adjacent au bord extérieur de la planche qui est recouverte par le film. Une pose optimale du film sur la planche est ainsi obtenue.

Les rainures sur la roue permettent une meilleure prise du film sur les roues, et contribuent à entraîner le film lors de l'avancement de la machine 1, ce qui permet d'éviter, conjointement avec le fait que la bobine 25 est libre de tourner sur elle-même sur les galets de caoutchouc 17, 18, 20A, 20B, de déchirer le film pendant sa pose.

Le film une fois posé sur la planche, les charrues 9A, 9B à l'arrière de la machine ramènent la terre rejetée vers l'extérieur de la machine 1 par les racleurs 11A, 11B, sur les bords du film posé qui se trouvent dans le sillon creusé. Le bord du film posé est ainsi recouvert de terre, ce qui permet d'assurer une bonne pose du film, qui ne s'envolera pas en cas d'intempérie, et permet d'éviter d'avoir à recourir à une main d'oeuvre pour recouvrir les bords du film. On peut noter que, compte-tenu des dimensions importantes de la machine en largeur, on peut prévoir des moyens de transport de celle-ci adaptés. Par exemple, on peut prévoir des moyens d'attelage à un tracteur sur une des traverses 2A, 2B et des roues sur l'autre traverse 2A, 2B, afin de pouvoir remorquer la machine dans le sens de sa longueur et non de sa largeur, ce qui empêcherait tout transport de celle-ci sur les routes.

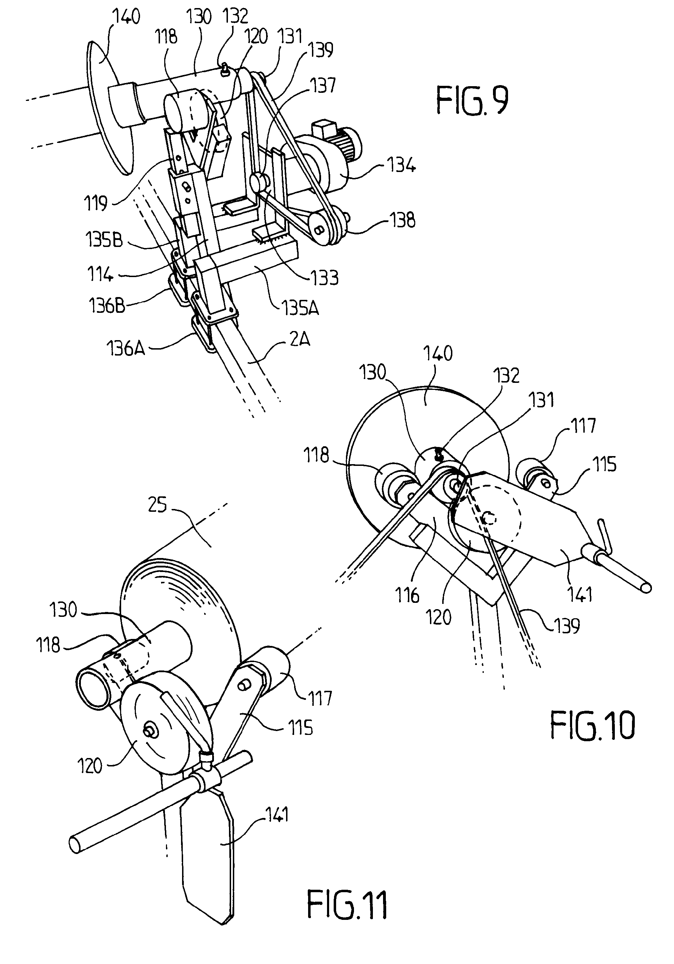

On a représenté sur les Figures 9 à 11 une variante de la machine permettant de réenrouler un film déroulé sur un axe.

La machine est sensiblement identique à la machine représentée sur la Figure 1, si ce n'est que pour réenrouler le film, le support en Y central 13C de la Figure 1 est démonté du longeron arrière 2D, et le frein 26 est lui aussi démonté ou bloqué en position haute lors du réenroulement, pour s'assurer de ne pas risquer de déchirer le film. Les éléments de support latéraux sont sensiblement identiques aux éléments de support en Y 13A et 13B de la Figure 1, seul le support latéral gauche 113A ayant été représenté sur les Figures.

L'élément de support en Y comprend un axe vertical 114, dont l'extrémité inférieure est fixée par une bride sur la traverse 2A, l'extrémité supérieure de l'axe vertical 114 se séparant en deux bras 115, 116, les deux bras 115, 116 formant une fourche avec l'axe vertical 114.

Chaque extrémité libre des bras 115, 116 porte un galet en caoutchouc ou matière plastique dure, respectivement 117, 118, analogues aux galets 17, 18 de la Figure 8.

Au voisinage de l'extrémité supérieure de l'axe vertical 114 est monté réglable en hauteur par une bride 114A un deuxième axe vertical 119, portant à son extrémité supérieure un galet 120 en matière plastique dure.

L'axe de rotation de la bobine 130 a un diamètre supérieur à la distance la plus courte séparant un point sur la surface du galet 117 (ou 118) et un point sur la surface du galet 120, de telle sorte que l'extrémité de l'axe de la bobine 130 repose sur les galets 117 et 120 (ou 118 et 120), et peut rouler sur ceux-ci.

L'axe de la bobine 130 porte à son extrémité un pignon 131 fixé par un ensemble vis-boulon 132 à l'extrémité de l'axe de la bobine 130

Un support de moteur 133, portant un moteur 134, est monté sur la traverse 2A, par l'intermédiaire de deux éléments d'équerre 135A, 135B, montés réglables en position sur la traverse 2A par l'intermédiaire de brides 136A, 136B.

Le moteur 134 entraîne en rotation un pignon 137, et une poulie 138 est montée sur le support de moteur 133, de telle sorte que pignons 131 et 137 et la poulie 138 ont le même plan de rotation.

Une courroie 139 (ou une chaîne si les pignons 131 et 137 et la poulie 138 sont crantés) transmet le mouvement de rotation du pignon 137 du moteur 134 au pignon 131 à l'extrémité de l'axe de rotation de la bobine 130, et donc à l'axe de rotation de la bobine 130 pour une action de réenroulement.

Un disque 140 de diamètre supérieur au diamètre maximal de la bobine de film entièrement réenroulée est fixé sur l'axe de rotation de la bobine 130, au voisinage du support 113A vers l'intérieur du châssis.

Le support en Y à l'autre extrémité de la machine et soutenant l'autre extrémité de l'axe de rotation de la bobine 130 est en tout point identique à celui décrit ci-dessus en rapport avec cette variante de la machine, et peut comporter ou non un autre moteur pour entraîner l'axe de la bobine 130. Dans le cas où l'autre support en Y n'a pas de moteur, le moteur doit être suffisamment puissant pour pouvoir enrouler la bobine à partir d'une seule extrémité de son axe.

En utilisation de réenroulement dans le cas avec un seul moteur 134 à une extrémité de l'axe de rotation de la bobine 130, on dispose l'extrémité de l'axe de rotation de la bobine 130, muni d'un disque 140 à chaque extrémité pour guider les bords latéraux du film, entre les galets 117 et 120, puis on fixe le pignon 131 à l'extrémité de l'axe de rotation de la bobine 130, le pignon 131 étant relié par la suite au moteur par l'intermédiaire de la courroie 139 et de la poulie 138. On fixe alors un bord libre du film à réenrouler sur l'axe de rotation de la bobine 130, par collage par exemple, puis on actionne le moteur 134 afin de réenrouler le film sur la bobine. Les disques 140, à chaque extrémité de l'axe de la bobine 130, permettent de guider les bords latéraux du film lors de son réenroulement, la bobine étant réenroulée entre les deux disques 140. Comme on l'a souligné plus haut, les traverses 2A, 2B étant réglables par rapport aux longerons 2C, 2D, pour ajuster la largeur de la machine, on pourra ajuster au préalable la largeur de la machine suivant la largeur du film à réenrouler, l'axe de rotation 130 devant être plus large que la largeur du film à réenrouler.

Les éléments de mise en volume du film pourront également être démontés, pour faciliter le réenroulement du film sur la machine.

Le film réenroulé sur une bobine peut ensuite être réutilisé pour recouvrir des cultures, comme cela a été décrit précédemment avec la première variante de la machine, ce qui permet d'utiliser plusieurs fois le même film, ce qui apporte une économie substantielle.

Les disques 140 seront avantageusement démontés de l'axe de rotation de la bobine, pour éviter tout déchirement du film lors du déroulement.

Lors du déroulement et de la pose du film, on pourra mettre des freins aux extrémités de l'axe de rotation de la bobine 130, pour limiter le mouvement de rotation de l'axe de rotation de la bobine.

Ces freins pourront par exemple être constitués par des éléments de cylindre (non représentés), de diamètre interne sensiblement égal au diamètre externe de l'axe de rotation de la bobine.

Ces éléments de cylindre seront fixés par rapport à la machine, et le frottement de l'axe de rotation de la bobine lors du déroulement dans ces éléments de cylindre pourra constituer un frein au déroulement de la bobine, l'avantage de ce frein étant qu'il n'est pas en contact directement avec le film comme le frein 26, et il ne risque donc pas d'abîmer celui-ci.

Une plaque 141 est prévue à chaque extrémité de l'axe de rotation de la bobine 130 pour l'empêcher de bouger latéralement. Cette plaque 141 est escamotable pour faciliter la pose de l'axe de rotation de la bobine 130 sur la machine.

Dans cette variante de la machine, en réenroulement de film déposé ou en déroulement de film réenroulé, l'axe de la bobine 130 repose sur les galets 118 (ou 117) et 120.

## Revendications

1. - Machine agricole pour le déroulement et la pose d'un film ou voile, notamment en grande largeur, comprenant au moins :
- un châssis (2) monté sur des roues (3A, 3B) ;
- des moyens (11A, 11B) de raclage de la terre montés sur le châssis (2) et positionnés, dans la direction de progression de la machine, à l'avant des roues (3A, 3B) pour dégager la terre à l'avant des roues (3A, 3B) avant le passage de celles-ci ;
- des moyens (9A, 9B) de charriage de la terre montés sur le châssis (2) et positionnés, dans la direction de progression de la machine, à l'arrière des roues (3A, 3B) pour rabattre de la terre à l'arrière des roues (3A, 3B) après le passage de celles-ci ;
- des moyens de support (13A, 13B, 13C) de bobine de film, montés sur le châssis (2), alimentant le film vers des moyens de déroulement et de pose du film sur le sol ; et
- des moyens (21A, 21B) de mise en volume du film situés entre les moyens de support (13A, 13B, 13C) de bobine de film et les moyens de déroulement et de pose du film pour donner du volume au film et éviter sa déchirure ;
les moyens de déroulement et de pose du film étant constitués par les roues (3A, 3B), les bords latéraux du film en utilisation étant amenés à passer sur les parties avant puis inférieure des roues (3A, 3B) dans la direction de progression de la machine pour un déroulement et une pose au sol du film, et à être recouverts de terre par les moyens (9A, 9B) de charriage de la terre,
**caractérisée par le fait que** les moyens de support (13A, 13B, 13C) de bobine de film sont montés surélevés par rapport aux moyens de déroulement et de pose du film pour donner plus de volume au film, la distance minimale entre l'axe de rotation de la bobine et les moyens de déroulement et de pose du film étant supérieure au rayon maximal de la bobine.

2. - Machine agricole selon la revendication 1,
**caractérisée par le fait que** chacun des moyens de support (13A, 13B, 13C) de bobine de film est réglable en hauteur par rapport au plan moyen du châssis (2) et/ou en position sur le châssis (2).

3. - Machine agricole selon l'une des revendications 1 ou 2, **caractérisée par le fait que** les moyens de support (13A, 13B, 13C) de bobine de film sont des éléments en forme de Y dirigés vers le haut, alignés, la bobine s'étendant entre les branches des éléments en forme de Y, et chaque branche du Y comportant à son extrémité libre des galets (17, 18) qui coopèrent avec la bobine de film afin de permettre son déroulement.

4. - Machine agricole selon la revendication 3,
**caractérisée par le fait que** les moyens de support (13A, 13B, 13C) de bobine de film portent en outre moyens de support (19) de galets (20A, 20B) supplémentaires qui coopèrent avec la bobine de film afin de faciliter son déroulement, positionnés au niveau de la fourche des éléments en forme de Y, lesdits moyens de support (19) de galets (20A, 20B) étant réglables en hauteur par rapport à la fourche des éléments en forme de Y pour s'adapter à l'épaisseur variable de la bobine de film.

5. - Machine agricole selon la revendication 3 ou la revendication 4, **caractérisée par le fait que** les galets (17, 18) et, lorsqu'ils sont présents, les galets (20A, 20B) sont en caoutchouc ou en matière plastique.

6. - Machine agricole selon l'une des revendications 1 à 5, **caractérisée par le fait qu'**au moins l'un des moyens de support (13A, 13B, 13C) de bobine de film supporte la bobine de film en son centre, afin d'éviter un cintrage de celle-ci, et que deux des moyens de support (13A, 13B, 13C) de bobine de film supportent les extrémités de la bobine, des moyens (25A, 25B) étant prévus sur ces deux derniers moyens de support (13A, 13B, 13C) de bobine pour éviter un mouvement latéral de la bobine.

7. - Machine agricole selon l'une des revendications 1 à 6, **caractérisée par le fait que** le châssis (2) est supporté à l'avant par des roulettes avant (5A, 5B), et à l'arrière par des roulettes arrière (7A, 7B), les plans de roulement des roulettes arrière (7A, 7B) étant inclinés par rapport à la verticale et se croisant sous le plan moyen du châssis (2), pour assurer une bonne directivité de la machine, les roulettes avant (5A, 5B) et/ou arrière (7A, 7B) étant avantageusement réglables en hauteur par rapport au châssis (2).

8. - Machine agricole selon l'une des revendications 1 à 7, **caractérisée par le fait que** les roues (3A, 3B) sont montées en suspension sur le châssis (2), pour s'adapter au terrain sur lequel la machine est utilisée.

9. - Machine agricole selon l'une des revendications 1 à 8, **caractérisée par le fait que** les pneus des roues (3A, 3B) sont rainurés pour assurer une meilleure prise du film sur les roues (3A, 3B) et un meilleur entraînement du film sur les roues (3A, 3B) pendant le déroulement et la pose du film.

10. - Machine agricole selon l'une des revendications 1 à 9, **caractérisée par le fait que** les plans de roulement des roues (3A, 3B) sont inclinés par rapport à la verticale et se croisent sous le plan moyen du châssis (2), et/ou sont inclinés par rapport à l'horizontale et se croisent vers l'avant du châssis (2), pour assurer une meilleure prise du film sur les roues (3A, 3B) et un meilleur entraînement de celui-ci par les roues (3A, 3B) .

11. - Machine agricole selon l'une des revendications 1 à 10, **caractérisée par le fait que** les jantes des roues (3A, 3B) sont décentrées vers l'extérieur du châssis (2), pour permettre une largeur entre chaque bord latéral du film posé minimale, et/ou sont réglables en position sur leurs axes de rotation, pour permettre un réglage des roues (3A, 3B).

12. - Machine agricole selon l'une des revendications 1 à 11, **caractérisée par le fait que** le châssis (2) porte des moyens (23) portant des galets de maintien (23A, 23B) coopérant avec chacune des roues (3A, 3B) pour maintenir le film sur chacune des roues (3A, 3B).

13. - Machine agricole selon l'une des revendications 1 à 12, **caractérisée par le fait que** les différents éléments constituant le châssis (2) sont agencés réglables en position entre eux de telle sorte que la dimension du châssis (2) est adaptable à différentes largeur de pose de film.

14. - Machine agricole selon l'une des revendications 1 à 13, **caractérisée par le fait que** le châssis (2) porte en outre des moyens d'attelage (12) à un tracteur.

15. - Machine agricole selon l'une des revendications 1 à 14, **caractérisée par le fait que** les moyens (11A, 11B) de raclage de la terre et/ou les moyens (9A, 9B) de charriage de la terre sont montés réglables en hauteur sur le châssis (2).

16. - Machine agricole selon l'une des revendications 1 à 15, **caractérisée par le fait que** le châssis (2) porte en outre un frein (26) de bobine en vue d'empêcher tout mouvement horizontal de celle-ci lors de l'utilisation de la machine.

17. - Machine agricole selon l'une des revendications 1 à 16, **caractérisée par le fait que** pour chaque côté du châssis (2), les moyens (11A, 11B) de raclage de la terre et les moyens (9A, 9B) de charriage de la terre sont alignés, les roues (3A, 3B) étant décalées vers l'intérieur du châssis (2) par rapport à cet alignement, pour permettre un meilleur recouvrement du film.

18. - Machine agricole selon la revendication 1,
**caractérisée par le fait qu'**elle comprend en outre un moteur (134) apte à être relié à l'axe de rotation de la bobine (130) pour l'entraîner en rotation, permettant de réenrouler un film sur l'axe de rotation de la bobine (130).

19. - Machine agricole selon la revendication 18,
**caractérisée par le fait que** l'axe de rotation de la bobine (130) porte des moyens (140) de guidage des bords latéraux du film lors de son réenroulement.

20. - Machine agricole selon l'une des revendications 18 et 19, **caractérisée par le fait qu'**elle comprend en outre des éléments de cylindre, de diamètre interne sensiblement égal au diamètre externe de l'axe de rotation de la bobine et fixés par rapport au châssis de la machine, disposés à chaque extrémité de l'axe de rotation de la bobine (130) et permettant par frottement de limiter le mouvement de rotation de la bobine.

21. - Utilisation de la machine agricole telle que définie à l'une quelconque des revendications 1 à 17 et 20, pour le déroulement et la pose d'un film sur des cultures, ou telle que définie à l'une quelconque des revendications 18 et 19, pour le réenroulement d'un film.
